# EUROPÄISCHE PATENTSCHRIFT

(11) **EP 3 312 760 B1**
(45) Veröffentlichungstag und Bekanntmachung des Hinweises auf die Patenterteilung: **18.03.2020**
(21) Anmeldenummer: 16194635.5
(22) Anmeldetag: 19.10.2016
(51) Int. Cl.: G06K 7/10

(54) **OPTISCHER SENSOR**
OPTICAL SENSOR
CAPTEUR OPTIQUE

(30) Priorität: 18.10.2016 EP 16194277
(43) Veröffentlichungstag der Anmeldung: 25.04.2018
(73) Patentinhaber: Leuze electronic GmbH + Co KG, 73277 Owen/Teck (DE)
(72) Erfinder: Droemer, Jörg, 72574 Bad Urach (DE)
(74) Vertreter: Ruckh, Rainer Gerhard

(56) Entgegenhaltungen:
- US-A1- 2004 173 684
- US-B1- 6 905 070

## Beschreibung

Die Erfindung betrifft einen optischen Sensor gemäß dem Oberbegriff des Anspruchs 1.

Ein derartiger optischer Sensor dient allgemein zur Erfassung von Objekten und weist hierzu einen Sendelichtstrahlen emittierenden Sender, einen Empfangslichtstrahlen empfangenden Empfänger sowie eine Auswerteeinheit, in welcher Empfangssignale des Empfängers zur Objekterfassung ausgewertet werden, auf.

Ein derartiger optischer Sensor kann insbesondere als Codeleser ausgebildet sein, mittels dessen Codes, insbesondere Barcodes erfasst werden. Bekannte Codeleser weisen eine Ablenkeinheit in Form eines rotierenden Polygonspiegelrads auf. Durch die Rotationsbewegung des Polygonspiegelrads werden die vom Sender emittierten Sendelichtstrahlen periodisch innerhalb eines Abtastbereichs abgelenkt. Dadurch werden die Sendelichtstrahlen entlang des Kontrastmusters des Codes geführt. Dadurch wird den am Code reflektierten Empfangslichtstrahlen eine dem Kontrastmuster entsprechende Amplitudenmodulation aufgeprägt. Die Empfangslichtstrahlen werden dann über das Polygonspiegelrad und eine abbildende Empfangsoptik, wie zum Beispiel eine Linse, zum Empfänger geführt. Die dort generierten Empfangssignale werden der Auswerteeinheit zugeführt. Dort erfolgt anhand der Empfangssignale eine Dekodierung des Codes.

Die US 2004/0173684 A1 betrifft ein tragbares Barcodelesegerät. Dieses ist als omnidirektionaler Scanner ausgebildet. Hierzu ist eine Scannereinheit mit einem Polygenspiegelrad und mehreren aneinander angeordneten trapezförmigen Planspiegeln.

Die US 6 905 070 B1 betrifft einen Barcodescanner. Dessen Scannereinheit erfasst ein Polygenspiegelband sowie eine um das Polygenspiegelband herum angeordnete konische Spiegelanordnung, die aus einer Anordnung von aneinander angeordneten trapezförmigen Planspiegeln gebildet ist.

Der Erfindung liegt die Aufgabe zugrunde, einen optischen Sensor derart auszubilden, dass mit diesem bei kleiner Baugröße Objekte innerhalb eines möglichst großen Tiefenschärfebereichs sicher erfasst werden können.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten und umfasst einen Sendelichtstrahlen emittierenden Sender, einen Empfangslichtstrahlen empfangenden Empfänger und eine Auswerteeinheit zur Auswertung von Empfangssignalen des Empfängers. Dem Empfänger ist als alleinige Empfangsoptik eine Anordnung von Planspiegeln zugeordnet. Die Planspiegel weisen jeweils eine rechteckige Kontur auf. Dabei grenzen jeweils zwei benachbarte Planspiegel mit ihren längsseitigen Rändern aneinander an. Die Ebenen dieser angrenzenden Planspiegel verlaufen in einem stumpfen Winkel zueinander. Die Empfangsoptik ist in Abstand zum Empfänger so angeordnet, dass die Verteilung der von einem Objekt zurückreflektierten Empfangslichtstrahlen auf den Planspiegeln abhängig von dem Abstand des Objekts zum optischen Sensor ist. Mittels der Empfangsoptik können Objekte innerhalb eines Tiefenschärfebereichs erfasst werden. Die Planspiegel sind derart dimensioniert, dass ein maximaler Empfangslichtpegel auf dem Empfänger nicht überschritten wird.

Die erfindungsgemäße Empfangsoptik, bestehend aus einer Anordnung, stellt eine nicht abbildende Optik dar, bei welcher durch eine geeignete Dimensionierung der einzelnen Planspiegel ein großer Tiefenschärfebereich vorgegeben werden kann innerhalb derer Objekte erfasst werden können. Durch eine geeignete Wahl und Dimensionierung der Planspiegel der Empfangsoptik kann insbesondere eine abstandsabhängige Empfangslichtdynamik, das heißt die Empfangslichtmenge beziehungsweise Empfangsleistung am Empfänger in Abhängigkeit der Distanz des detektierten Objekts, gezielt vorgegeben werden. Insbesondere kann die Empfangslichtdynamik in bestimmten Teilbereichen des Tiefenschärfebereichs, zum Beispiel in einem Nahbereich, das heißt also bei geringen Distanzen zum optischen Sensor vorgegeben werden, so dass dort eine gleichbleibend hohe Nachweissicherheit des optischen Sensors erhalten wird.

Ein weiterer Vorteil der Erfindung besteht darin, dass die Empfangsoptik mit geringem Kostenaufwand gefertigt werden kann und zudem eine geringe Baugröße des gesamten optischen Sensors ermöglicht.

Die Herstellung der Empfangsoptik erfolgt beispielsweise derart, dass als Planspiegel Folien verwendet werden, die auf aus Kunststoff bestehenden Grundkörpern aufgeklebt werden. Diese Herstellungsmethode ist erheblich einfacher als die Herstellung von Planspiegeln durch Aufdampfen oder Sputtern auf entsprechenden Grundkörpern.

Die geringe Baugröße des optischen Sensors wird insbesondere dadurch erreicht, dass außer der nicht abbildenden erfindungsgemäßen Empfangsoptik keine weiteren Optikkomponenten, insbesondere keine abbildenden Optiken wie Linsen benötigt werden.

Der erfindungsgemäße optische Sensor kann zur Detektion von unterschiedlichen Objekten eingesetzt werden, wobei der Empfänger des optischen Sensors generell nur für eine Intensitätsauswertung, das heißt Auswertung der Lichtmenge der einfallenden Empfangslichtstrahlen ausgebildet ist. Besonders vorteilhaft besteht der Empfänger nur aus einer einzigen Photodiode, was den konstruktiven Aufwand des optischen Sensors und damit letztlich auch dessen Baugröße weiter reduziert.

Gemäß einer besonders vorteilhaften Ausgestaltung der Erfindung ist der optische Sensor als Codeleser ausgebildet, mit dem Codes, insbesondere Barcodes erfasst werden.

Prinzipiell kann dabei der optische Sensor Sendelichtstrahlen in eine fest vorgegebene, unveränderte Richtung abstrahlen. Dann wird ein Code dadurch erfasst, dass dieser durch den Bereich der Sendelichtstrahlen hindurchbewegt wird.

Besonders vorteilhaft weist der optische Sensor eine Ablenkeinheit zur periodischen Ablenkung der vom Sender emittierten Sendelichtstrahlen auf.

Zweckmäßigerweise sind mit der Ablenkeinheit die Sendelichtstrahlen in einer parallel zu den Längsachsen der Planspiegel verlaufenden Ablenkrichtung abgelenkt.

Die Ablenkbewegung der Sendelichtstrahlen ist somit optimal an die Anordnung der Planspiegel der Empfangsoptik angepasst, so dass die Sendelichtstrahlen mit einer äußerst geringen Winkeldynamik über die Empfangsoptik auf den Empfänger geführt werden. Ein wesentlicher Vorteil der erfindungsgemäßen Empfangsoptik besteht dabei darin, dass im Gegensatz zu abbildenden Optiken wie Zylinderlinsen, die bei bekannten Codelesern zur Abbildung von über eine Ablenkeinheit abgelenkten Lichtstrahlen auf einen Empfänger eingesetzt werden, keine Abbildungsfehler erhalten werden. Bei Codeleser, die mit Zylinderlinsen als Empfangsoptik arbeiten, entsteht ein sogenannter Koma-Abbildungsfehler, der dazu führt, dass bei seitlichem Einfall der Empfangslichtstrahlen diese vor dem Empfänger stark defokussiert werden. Dieser Abbildungsfehler wird bei der erfindungsgemäßen Empfangsoptik vollständig vermieden.

Weiter vorteilhaft sind der Empfänger und die Empfangsoptik so angeordnet, dass die von einem Objekt zurückreflektierten Empfangslichtstrahlen ohne Führung über die Ablenkeinheit direkt von der Empfangsoptik zum Empfänger geführt sind.

Dadurch kann die Ablenkeinheit eine kleine Baugröße aufweisen, wodurch die Baugröße des gesamten optischen Sensors weiter reduziert werden kann.

Besonders vorteilhaft weist die Ablenkeinheit ein rotierendes Polygonspiegelrad auf.

Da die Ablenkeinheit eine geringe Baugröße aufweisen kann, weil die Empfangslichtstrahlen nicht mehr über diese geführt werden müssen, kann das Polygonspiegelrad als Frästeil, das zum Beispiel aus Aluminium besteht, ausgebildet sein. Dies kann kostengünstiger und exakter als ein Polygonspiegelrad in Form eines Kunststoffspritzgussteils gefertigt werden, da insbesondere eine Reflexionsbeschichtung der Spiegelflächen des Polygonspiegelrads entfällt.

Ein wesentlicher Vorteil des Polygonspiegelrads zu Ablenkeinheiten in Form von Schwingspiegeln besteht darin, dass sich das Polygonspiegelrad stets mit derselben Geschwindigkeit bewegt, wogegen die Schwingspiegel in ihren Umlenkpunkten zum Stillstand kommen. Durch diese Variation der Geschwindigkeit bei der Abtastung der Codes ist zur Auswertung der entsprechenden Empfangssignale eine aufwändigere Auswerteelektronik mit einem erweiterten Frequenzgang erforderlich.

Weiter vorteilhaft ist ein Umlenkspiegel vorgesehen, wobei die über die Ablenkeinheit geführten Sendelichtstrahlen auf den Umlenkspiegel geführt sind und von dort in Richtung der zu detektierenden Objekte reflektiert werden, und wobei von einem Objekt zurückreflektierte Empfangslichtstrahlen über den Umlenkspiegel zur Empfangsoptik geführt sind.

Dabei grenzt der Umlenkspiegel direkt an die Empfangsoptik an.

Damit kann eine besonders kompakte Bauform des optischen Sensors realisiert werden.

Vorteilhaft sind die Planspiegel der Empfangsoptik so dimensioniert, dass von einem in einer den Tiefenschärfebereich begrenzenden Maximaldistanz angeordnetem Objekt zurückreflektierte Empfangslichtstrahlen auf alle Planspiegel treffen.

Dabei sind bei einem in der Maximaldistanz angeordneten Objekt die Empfangslichtstrahlen mit zumindest näherungsweise gleichen Lichtmengenanteilen über die Planspiegel zum Empfänger geführt.

Da die Empfangslichtstrahlen über alle Planspiegel zum Empfänger geführt sind, ergibt sich eine entsprechend erhöhte Empfangsleistung am Empfänger, was eine wesentliche Voraussetzung zur Erzielung eines großen Tiefenschärfebereichs ist.

Durch eine geeignete Dimensionierung der Planspiegel kann gezielt eine abstandsabhängige Empfangslichtdynamik, das heißt Abstandsabhängigkeit der Empfangsleistung und damit die Lichtmenge am Empfänger vorgegeben werden, wodurch insbesondere ein Tiefenschärfebereich flexibel vorgegeben werden kann. Dabei erfolgt die Dimensionierung der Planspiegel generell derart, dass ein maximaler Empfangslichtpegel auf dem Empfänger nicht überschritten wird.

Gemäß einer vorteilhaften Ausgestaltung sind die Planspiegel der Empfangsoptik so dimensioniert, dass in einem Nahbereich innerhalb des Tiefenschärfebereichs die Lichtmenge der Empfangslichtstrahlen ihren Maximalwert aufweist.

Dadurch wird im Nahbereich, das heißt in kleinen Distanzen zum optischen Sensor eine sichere Detektion von Objekten, insbesondere Codes ermöglicht.

Die mit dem erfindungsgemäßen optischen Sensor erzielte Kombination einer geringen Baugröße und der Nachweismöglichkeit von Codes lässt sich mit bekannten Codelesern nicht oder nur unzureichend realisieren. Der erfindungsgemäße optische Sensor kann damit besonders vorteilhaft als Codeleser im Bereich der Blutanalyse eingesetzt werden und dort spezifisch in einem Blutanalysegerät integriert werden.

Besonders vorteilhaft liegen die Maxima der Lichtmengen der von den einzelnen Planspiegeln zum Empfänger geführten Empfangslichtstrahlen innerhalb des Nahbereichs.

Dabei weist im Nahbereich die Lichtmenge auf dem Empfänger eine geringe distanzabhängige Variation auf.

Damit wird im gesamten Nahbereich eine etwa gleichbleibend hohe Nachweisempfindlichkeit bei der Objektdetektion gewährleistet.

Die Erfindung wird im Folgenden anhand der Zeichnungen erläutert. Es zeigen:
- Figur 1:: Perspektivische Darstellung eines Ausführungsbeispiels des erfindungsgemäßen optischen Sensors bei abgenommenem Gehäusedeckel.
- Figur 2:: Längsschnitt durch den optischen Sensor gemäß Figur 1.
- Figur 3:: Distanzabhängige Empfangsleistungsverläufe für den optischen Sensor gemäß den Figuren 1 und 2.

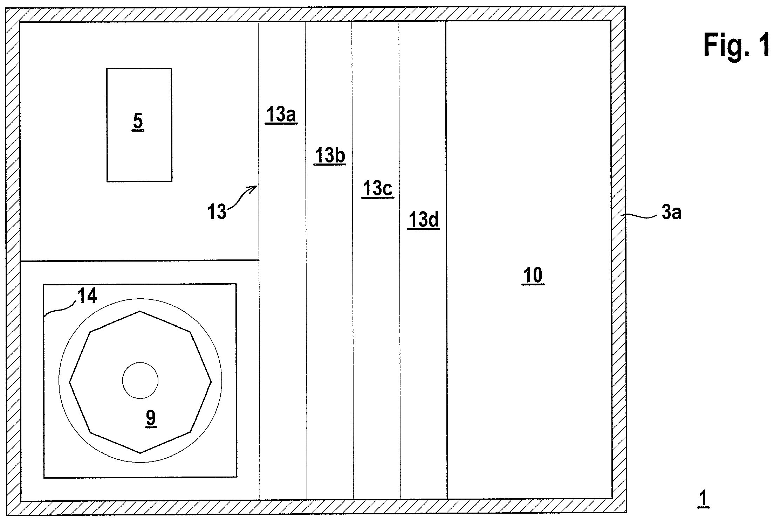

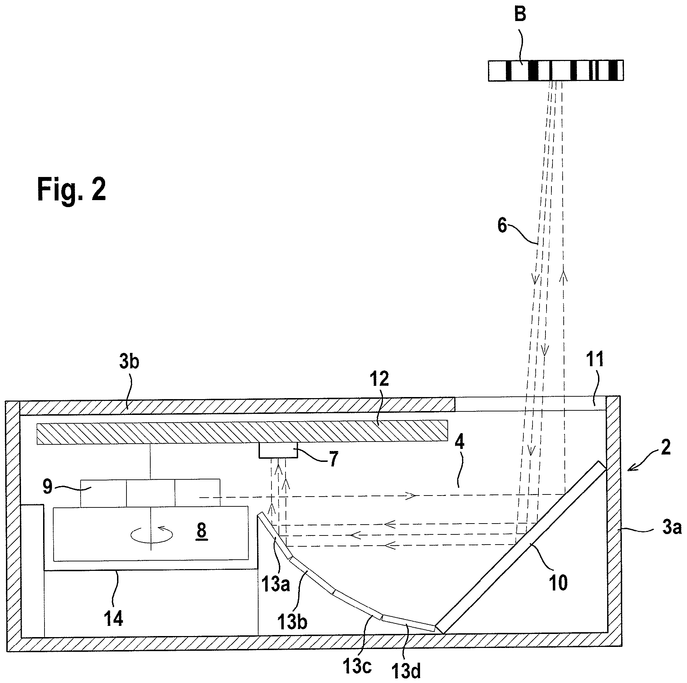

Die Figuren 1 und 2 zeigen ein Ausführungsbeispiel des erfindungsgemäßen optischen Sensors 1, welcher im vorliegenden Fall als Codeleser ausgebildet ist, mittels dessen Codes, insbesondere Barcodes B erfasst werden.

Die Komponenten des optischen Sensors 1 sind in einem quaderförmigen Gehäuse 2 integriert, das aus einem Gehäuseunterteil 3a und einem Gehäusedeckel 3b besteht.

Der optische Sensor 1 weist einen Sendelichtstrahlen 4 emittierenden Sender 5 in Form einer Laserdiode und einen Empfangslichtstrahlen 6 empfangenden Empfänger 7 in Form einer Photodiode auf. Damit die Photodiode eine möglichst große lichtempfindliche Fläche aufweist, kann diese aus mehreren photosensitiven Segmenten aufgebaut sein.

Weiterhin weist der optische Sensor 1 eine Ablenkeinheit in Form eines von einem Motor 8 angetriebenen Polygonspiegelrad 9 auf. Die Drehachse des Polygonspiegelrads 9 verläuft senkrecht zum Boden des Gehäuses 2, der bei der Anordnung von Figur 1 in einer horizontalen Ebene liegt. Mit dem Polygonspiegelrad 9 werden die Sendelichtstrahlen 4 innerhalb eines Abtastbereichs periodisch abgelenkt. Die am Polygonspiegelrad 9 reflektierten Sendelichtstrahlen 4 verlaufen dabei parallel zum Boden des Gehäuses 2 und treffen dann auf einen Umlenkspiegel 10, der um 45° bezüglich des Bodens geneigt ist. Die an dem Umlenkspiegel 10 reflektierten Sendelichtstrahlen 4 werden durch ein Austrittsfenster 11 aus dem Gehäuse 2 geführt.

Der Empfänger 7 ist an der Unterseite einer Leiterplatte 12 montiert, die dicht unterhalb des Gehäusebodens montiert ist. Auf der Leiterplatte 12 sind auch alle weiteren elektronischen Komponenten des optischen Sensors 1, insbesondere die Komponenten einer Auswerteeinheit zur Auswertung der Empfangssignale des Empfängers 7, angeordnet, so dass im optischen Sensor 1 keine weiteren Leiterplatten 12 benötigt werden.

An den Umlenkspiegel 10 grenzt eine Empfangsoptik 13 an, die aus einer Anordnung von Planspiegeln 13a-d besteht. Im vorliegenden Fall besteht die Empfangsoptik 13 aus vier Planspiegeln 13a-d. Die Planspiegel 13a-d weisen jeweils eine rechteckige Kontur auf, wobei deren Längen identisch sind. Jeweils zwei Planspiegel 13a-d grenzen mit ihren längsseitigen Rändern aneinander an, wobei die Elemente dieser angrenzenden Planspiegel 13a-d in einem stumpfen Winkel zueinander verlaufen. Dadurch bilden die Planspiegel 13a-d der Empfangsoptik 13 eine konkave Planspiegel-Anordnung.

Die Planspiegel 13a-d können durch Aufkleben von spiegelnden Folien auf Grundkörpern aus Kunststoff oder dergleichen kostengünstig hergestellt werden.

Die Empfangsoptik 13 verläuft in einem Neigungswinkel zum Boden des Gehäuses 2, so dass diese mit dem Umlenkspiegel 10 eine V-förmige Spiegelanordnung bildet. Während sich der Umlenkspiegel 10 bis zum oberen Rand des Gehäuseunterteils 3a erstreckt, erstreckt sich die Empfangsoptik 13 nur bis zu dem oberen Rand einer seitlichen Einfassung 14 des Polygonspiegelrads 9.

Die Empfangsoptik 13 stellt eine nicht abbildende Optik dar und stellt das einzige empfangsseitige Optikelement dar. Der oberhalb der Empfangsoptik 13 angeordnete Empfänger 7 braucht nicht gegenüber der Empfangsoptik 13 justiert werden, da die Empfangsoptik 13 mit den Planspiegeln 13a-d großflächige Optikelemente aufweist.

Prinzipiell könnte zusätzlich vor dem Empfänger 7 auch ein Fremdlichtfilter vorgesehen sein.

Die vom Sender 5 emittierten Sendelichtstrahlen 4 werden vom Polygonspiegelrad 9 in einer Abtastrichtung abgelenkt, die parallel zu den Planspiegeln 13a-d der Empfangsoptik 13 verläuft. Die so abgelenkten Sendelichtstrahlen 4 werden direkt zum Umlenkspiegel 10 geführt. Die am Umlenkspiegel 10 reflektierten Sendelichtstrahlen 4 durchsetzen das Austrittsfenster 11 und treffen auf den zu detektierenden Barcode B. Die am Barcode B zurückreflektierten Empfangslichtstrahlen 6 weisen eine dem Kontrastmuster des Barcodes B entsprechende Amplitudenmodulation auf. Die Empfangslichtstrahlen 6 durchsetzen das Austrittfenster 11 und werden dann am Umlenkspiegel 10 so abgelenkt, dass sie auf die Planspiegel 13a-d der Empfangsoptik 13 treffen, wobei die Auftreffpunkte der Empfangslichtstrahlen 6 auf den Planspiegeln 13a-d unabhängig von der Distanz D des Barcodes B zum optischen Sensor 1 sind.

Von den Planspiegeln 13a-d der Empfangsoptik 13 werden die Empfangslichtstrahlen 6 direkt auf den Empfänger 7 geführt. Die dadurch generierten Empfangssignale werden zur Dekodierung des Barcodes B in der Auswerteeinheit ausgewertet.

Da die Empfangslichtstrahlen 6 von der Empfangsoptik 13 direkt zum Empfänger 7 und damit nicht über das Polygonspiegelrad 9 geführt sind, kann das Polygonspiegelrad 9 eine entsprechend kleine Baugröße aufweisen. Das Polygonspiegelrad 9 besteht vorzugsweise aus einem Frästeil aus Aluminium.

Da die Empfangsoptik 13 mit den ebenen Planspiegeln 13a-d nicht abbildende optische Elemente aufweist und zudem die Abtastrichtung der Sendelichtstrahlen 4 parallel zu den Längsachsen der Planspiegel 13a-d verläuft, wird eine sehr geringe Winkeldynamik erhalten, das heißt für verschiedene Ablenkwinkel der Sendelichtstrahlen 4 werden keine Verzerrungen oder Defokussierungen der Empfangslichtstrahlen 6 erhalten, wodurch die Nachweissicherheit des optischen Sensors 1 erhöht ist.

Durch eine geeignete Wahl der Anzahl, der Anordnung und Dimensionierung der Planspiegel 13a-d der Empfangsoptik 13 kann gezielt eine abstandsabhängige Empfangslichtdynamik vorgesehen werden, wodurch insbesondere ein großer Tiefenschärfebereich, innerhalb dessen Barcodes B erfasst werden können, vorgesehen werden kann. Der Begriff der Empfangslichtdynamik ist definiert durch die Variation der Empfangslichtleistung am Empfänger 7 in Abhängigkeit der Distanz D des detektierten Objekts. Der Tiefenschärfebereich ist definiert durch den Abstandsbereich am optischen Sensor 1, innerhalb dessen Codes, insbesondere Barcodes B erfasst werden können.

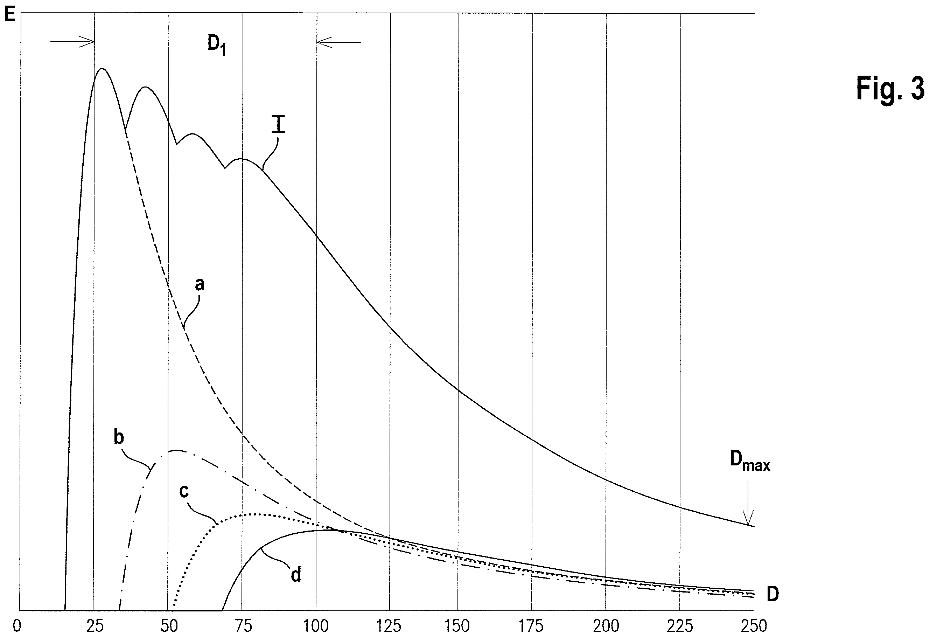

Ein Beispiel für eine derartige Auslegung zeigt Figur 3. Figur 3 zeigt die Empfangsleistungen E in Abhängigkeit der Distanz D des detektierten Barcodes B, wobei die Distanz D in mm angegeben ist.

Dabei sind mit a-d die Empfangsleistungen, die von den einzelnen Planspiegeln 13a-d stammen bezeichnet. Mit I ist die resultierende Gesamtempfangsleistung, die am Empfänger 7 registriert wird, bezeichnet.

Die Planspiegel 13a-d der Empfangsoptik 13 des optischen Sensors 1 sind so ausgelegt, dass in einer den Tiefenschärfebereich zu großen Distanzen D hin begrenzenden Maximaldistanz Dₘₐₓ die Empfangsleistungen a-d für alle Planspiegel 13a-d gleich sind, das heißt zur Gesamtempfangsleistung I am Empfänger 7 tragen alle Planspiegel 13a-d gleich bei.

In einem Nahbereich D₁ liegen die Maxima der Empfangsleistungen a-d für die einzelnen Planspiegeln 13a-d. Die Planspiegel 13a-d sind so dimensioniert, dass die Maxima der Empfangsleistungen a-d in unterschiedlichen Abständen dicht aufeinander folgen.

Zudem sind die Planspiegel 13a-d so dimensioniert, dass sich deren Empfangsleistungen a-d zu einer Gesamtleistung I addieren, die im Nahbereich D₁ einen nahezu gleichbleibend hohen Wert mit einer geringen distanzabhängigen Variation, das heißt einer geringen Empfangslichtdynamik aufweist. Damit ist im Nahbereich D₁ eine besonders hohe Nachweisempfindlichkeit zur Detektion des Barcodes B gegeben.

### Bezugszeichenliste

- (1): Optischer Sensor
- (2): Gehäuse
- (3a): Gehäuseunterteil
- (3b): Gehäusedeckel
- (4): Sendelichtstrahlen
- (5): Sender
- (6): Empfangslichtstrahlen
- (7): Empfänger
- (8): Motor
- (9): Polygonspiegelrad
- (10): Umlenkspiegel
- (11): Austrittsfenster
- (12): Leiterplatte
- (13): Empfangsoptik
- (13a-d): Planspiegel
- (14): Einfassung
- (B): Barcode
- (D): Distanz
- (D₁): Nahbereich

## Patentansprüche

1. Optischer Sensor (1) zur Erfassung von Objekten, mit einem Sendelichtstrahlen (4) emittierenden Sender (5), einem Empfangslichtstrahlen (6) empfangenden Empfänger (7) und einer Auswerteeinheit zur Auswertung von Empfangssignalen des Empfängers (7), **dadurch gekennzeichnet, dass** dem Empfänger (7) als Empfangsoptik (13) eine Anordnung von Planspiegel (13a-d) zugeordnet ist, wobei die Planspiegel jeweils eine rechteckige Kontur aufweisen und deren Längen identisch sind, wobei jeweils zwei benachbarte Planspiegel (13a-d) mit ihren längsseitigen Rändern aneinander angrenzen und die Ebenen dieser angrenzenden Planspiegel in einem stumpfen Winkel zueinander verlaufen, wobei die Empfangsoptik (13) in Abstand zum Empfänger (7) so angeordnet ist, dass die Verteilung der von einem Objekt zurückreflektierten Empfangslichtstrahlen (6) auf den Planspiegeln (13a-d) abhängig von dem Abstand des Objekts zum optischen Sensor (1) ist, und wobei mittels der Empfangsoptik (13) Objekte innerhalb eines Tiefenschärfebereichs erfasst werden können, in dem die Planspiegel derart dimensioniert sind, dass ein maximaler Empfangslichtpegel auf dem Empfänger nicht überschritten wird.

2. Optischer Sensor nach Anspruch 1, **dadurch gekennzeichnet, dass** dieser ein Codeleser ist.

3. Optischer Sensor nach einem der Ansprüche 1 oder 2, **dadurch gekennzeichnet, dass** dieser eine Ablenkeinheit zur periodischen Ablenkung der vom Sender (5) emittierten Sendelichtstrahlen (4) aufweist.

4. Optischer Sensor nach Anspruch 3, **dadurch gekennzeichnet, dass** mit der Ablenkeinheit die Sendelichtstrahlen (4) in einer parallel zu den Längsachsen der Planspiegel (13a-d) verlaufenden Ablenkrichtung abgelenkt sind.

5. Optischer Sensor nach einem der Ansprüche 1 bis 4, **dadurch gekennzeichnet, dass** der Empfänger (7) und die Empfangsoptik (13) so angeordnet sind, dass die von einem Objekt zurückreflektierten Empfangslichtstrahlen (6) ohne Führung über die Ablenkeinheit direkt von der Empfangsoptik (13) zum Empfänger (7) geführt sind.

6. Optischer Sensor nach einem der Ansprüche 3 bis 5, **dadurch gekennzeichnet, dass** die Ablenkeinheit ein rotierendes Polygonspiegelrad (9) aufweist.

7. Optischer Sensor nach einem der Ansprüche 3 bis 6, **dadurch gekennzeichnet, dass** ein Umlenkspiegel (10) vorgesehen ist, wobei die über die Ablenkeinheit geführten Sendelichtstrahlen (4) auf den Umlenkspiegel (10) geführt sind und von dort in Richtung der zu detektierenden Objekte reflektiert werden, und wobei von einem Objekt zurückreflektierte Empfangslichtstrahlen (6) über den Umlenkspiegel (10) zur Empfangsoptik (13) geführt sind.

8. Optischer Sensor nach Anspruch 7, **dadurch gekennzeichnet, dass** der Umlenkspiegel (10) direkt an die Empfangsoptik (13) angrenzt.

9. Optischer Sensor nach einem der Ansprüche 1 bis 8, **dadurch gekennzeichnet, dass** der Empfänger (7) nur zur Erfassung der Lichtintensität der Empfangslichtstrahlen (6) ausgebildet ist.

10. Optischer Sensor nach Anspruch 9, **dadurch gekennzeichnet, dass** der Empfänger (7) von einer oder mehreren nebeneinander liegenden Photodioden gebildet ist.

11. Optischer Sensor nach einem der Ansprüche 1 bis 10, **dadurch gekennzeichnet, dass** die Planspiegel (13a-d) der Empfangsoptik (13) so dimensioniert sind, dass von einem in einer den Tiefenschärfebereich begrenzenden Maximaldistanz angeordnetem Objekt zurückreflektierte Empfangslichtstrahlen (6) auf alle Planspiegel (13a-d) treffen.

12. Optischer Sensor nach Anspruch 11, **dadurch gekennzeichnet, dass** bei einem in der Maximaldistanz angeordneten Objekt die Empfangslichtstrahlen (6) mit zumindest näherungsweise gleichen Lichtmengenanteilen über die Planspiegel (13a-d) zum Empfänger (7) geführt sind.

13. Optischer Sensor nach einem der Ansprüche 1 bis 12, **dadurch gekennzeichnet, dass** die Planspiegel (13a-d) der Empfangsoptik (13) so dimensioniert sind, dass in einem Nahbereich (D₁) innerhalb des Tiefenschärfebereichs die Lichtmenge der Empfangslichtstrahlen (6) ihren Maximalwert aufweist.

14. Optischer Sensor nach Anspruch 13, **dadurch gekennzeichnet, dass** die Maxima der Lichtmengen der von den einzelnen Planspiegeln (13a-d) zum Empfänger (7) geführten Empfangslichtstrahlen (6) innerhalb des Nahbereichs (D₁) liegen.

15. Optischer Sensor nach einem der Ansprüche 13 oder 14, **dadurch gekennzeichnet, dass** im Nahbereich (D₁) die Lichtmenge auf dem Empfänger (7) eine geringe distanzabhängige Variation aufweist.

16. Optischer Sensor nach einem der Ansprüche 1 bis 15, **dadurch gekennzeichnet, dass** dessen elektrische Komponenten auf einer Leiterplatte (12) angeordnet sind.

## Claims

1. Optical sensor (1) for detecting objects, having a transmitter (5) emitting transmitted light beams (4), a receiver (7) receiving received light beams (6) and an evaluation unit for evaluating received signals from the receiver (7), **characterized in that** an arrangement of plane mirrors (13a-d) is assigned to the receiver (7) as receiving optics (13), wherein the plane mirrors each have a rectangular contour and their lengths are identical, wherein in each case two adjacent plane mirrors (13a-d) adjoin one another with their longitudinal edges and the planes of these adjacent plane mirrors extend at an obtuse angle to one another, wherein the receiving optics (13) is arranged at a distance from the receiver (7) in such a way that the distribution of the received light beams (6) reflected back from an object on the plane mirrors (13a-d) is dependent on the distance of the object from the optical sensor (1), and wherein objects within a depth-of-field range in which the plane mirrors are dimensioned in such a way that a maximum received light level on the receiver is not exceeded can be detected by means of the receiving optics (13).

2. The optical sensor according to claim 1, **characterised in that** it is a code reader.

3. The optical sensor according to one of claims 1 or 2, **characterised in that** it has a deflection unit for the periodic deflection of the transmitted light beams (4) emitted by the transmitter (5).

4. The optical sensor according to claim 3, **characterised in that** the transmitted light beams (4) are deflected by the deflection unit in a deflection direction running parallel to the longitudinal axes of the plane mirrors (13a-d).

5. The optical sensor according to any one of claims 1 to 4, **characterised in that** the receiver (7) and the receiving optics (13) are arranged in such a way that the received light beams (6) reflected back from an object are guided directly from the receiving optics (13) to the receiver (7) without being guided via the deflection unit.

6. The optical sensor according to one of claims 3 to 5, **characterised in that** the deflection unit has a rotating polygon mirror wheel (9).

7. The optical sensor according to one of claims 3 to 6, **characterised in that** a deflecting mirror (10) is provided, wherein the transmitted light beams (4) guided via the deflecting unit are guided onto the deflecting mirror (10) and are reflected from there in the direction of the objects to be detected, and wherein received light beams (6) reflected back from an object are guided via the deflecting mirror (10) to the receiving optics (13).

8. The optical sensor according to claim 7, **characterised in that** the deflecting mirror (10) directly adjoins the receiving optics (13).

9. The optical sensor according to any one of claims 1 to 8, **characterised in that** the receiver (7) is designed only to detect the light intensity of the received light beams (6).

10. The optical sensor according to claim 9, **characterised in that** the receiver (7) is formed by one or more photo diodes lying next to one another.

11. The optical sensor according to any one of claims 1 to 10, **characterized in that** the plane mirrors (13a-d) of the receiving optics (13) are dimensioned such that receiving light beams (6) reflected back from an object arranged at a maximum distance limiting the depth-of-field range strike all plane mirrors (13a-d).

12. The optical sensor according to claim 11, **characterised in that**, in the case of an object arranged at the maximum distance, the received light beams (6) are guided with at least approximately equal light quantity fractions via the plane mirrors (13a-d) to the receiver (7).

13. The optical sensor according to any one of claims 1 to 12, **characterised in that** the plane mirrors (13a-d) of the receiving optics (13) are dimensioned in such a way that the light quantity of the received light beams (6) has its maximum value in a close range (D₁) within the depth-of-field range.

14. The optical sensor according to claim 13, **characterised in that** the maxima of the light quantities of the received light beams (6) guided by the individual plane mirrors (13a-d) to the receiver (7) lie within the near range (D₁).

15. The optical sensor according to one of claims 13 or 14, **characterised in that** in the near range (D₁) the quantity of light on the receiver (7) has a small distance-dependent variation.

16. The optical sensor according to one of claims 1 to 15, **characterised in that** its electrical components are arranged on a printed circuit board (12).

## Revendications

1. Capteur optique (1) pour la détection d'objets, comportant un émetteur (5) émettant des rayons lumineux d'émission (4), un récepteur (7) recevant des rayons lumineux de réception (6) et une unité d'évaluation pour évaluer les signaux de réception du récepteur (7), **caractérisé en ce qu'**un agencement de miroirs plans (13a-d) est associé au récepteur (7) en tant qu'optique de réception (13), dans laquelle les miroirs plans ont chacun un contour rectangulaire et leurs longueurs sont identiques, dans laquelle deux miroirs plans voisins (13a-d) se rejoignent à chaque fois par leurs bords longitudinaux et les plans de ces miroirs plans voisins s'étendent l'un par rapport à l'autre sous un angle obtus, dans lequel l'optique de réception (13) est disposée à une certaine distance du récepteur (7) de telle sorte que la répartition des faisceaux lumineux reçus (6) réfléchis par un objet sur les miroirs plans (13ad) dépend de la distance de l'objet par rapport au capteur optique (1), et dans lequel des objets situés dans une plage de profondeur de champ dans laquelle les miroirs plans sont dimensionnés de telle sorte qu'un niveau maximal de lumière reçue sur le récepteur n'est pas dépassé peuvent être détectés au moyen de l'optique de réception (13).

2. Capteur optique selon la revendication 1, **caractérisé en ce qu'**il s'agit d'un lecteur de code.

3. Capteur optique selon l'une des revendications 1 ou 2, **caractérisé en ce qu'**il comporte une unité de déviation pour la déviation périodique des faisceaux lumineux émis (4) par l'émetteur (5).

4. Capteur optique selon la revendication 3, **caractérisé en ce que** les faisceaux lumineux transmis (4) sont déviés par l'unité de déviation dans une direction de déviation s'étendant parallèlement aux axes longitudinaux des miroirs plans (13a-d).

5. Capteur optique selon l'une des revendications 1 à 4, **caractérisé en ce que** le récepteur (7) et l'optique de réception (13) sont disposés de telle sorte que les faisceaux lumineux reçus (6) réfléchis par un objet sont guidés directement de l'optique de réception (13) vers le récepteur (7) sans être guidés par l'unité de déviation.

6. Capteur optique selon l'une des revendications 3 à 5, **caractérisé en ce que** l'unité de déviation comporte une roue à miroirs polygonaux rotatifs (9).

7. Capteur optique selon l'une des revendications 3 à 6, **caractérisé en ce qu'**il est prévu un miroir de déviation (10), les rayons lumineux d'émission (4) guidés par l'unité de déviation étant dirigés sur le miroir de déviation (10) et étant réfléchis par celui-ci en direction des objets à détecter, et les rayons lumineux de réception (6) réfléchis par un objet étant dirigés par le miroir de déviation (10) vers l'optique de réception (13).

8. Capteur optique selon la revendication 7, **caractérisé en ce que** le miroir de déviation (10) est directement adjacent à l'optique de réception (13).

9. Capteur optique selon l'une quelconque des revendications 1 à 8, **caractérisé en ce que** le récepteur (7) est conçu uniquement pour détecter l'intensité lumineuse des faisceaux lumineux reçus (6).

10. Capteur optique selon la revendication 9, **caractérisé en ce que** le récepteur (7) est formé par une ou plusieurs photodiodes placées l'une à côté de l'autre.

11. Capteur optique selon l'une quelconque des revendications 1 à 10, **caractérisé en ce que** les miroirs plans (13a-d) de l'optique de réception (13) sont dimensionnés de telle sorte que les faisceaux lumineux de réception (6) réfléchis par un objet disposé à une distance maximale limitant la plage de profondeur de champ frappent tous les miroirs plans (13a-d).

12. Capteur optique selon la revendication 11, **caractérisé en ce que**, dans le cas d'un objet disposé à la distance maximale, les faisceaux lumineux reçus (6) sont guidés avec des fractions de quantité de lumière au moins approximativement égales par les miroirs plans (13a-d) vers le récepteur (7).

13. Capteur optique selon l'une des revendications 1 à 12, **caractérisé en ce que** les miroirs plans (13a-d) de l'optique de réception (13) sont dimensionnés de telle sorte que la quantité de lumière des faisceaux lumineux reçus (6) a sa valeur maximale dans une zone proche (D₁) à l'intérieur de la zone de profondeur de champ.

14. Capteur optique selon la revendication 13, **caractérisé en ce que** les maxima des quantités de lumière des faisceaux lumineux reçus (6) guidés par les différents miroirs plans (13a-d) vers le récepteur (7) se trouvent dans la zone de proximité (D₁).

15. Capteur optique selon l'une des revendications 13 ou 14, **caractérisé en ce que** dans la zone de proximité (D₁), la quantité de lumière sur le récepteur (7) présente une faible variation en fonction de la distance.

16. Capteur optique selon l'une des revendications 1 à 15, **caractérisé en ce que** ses composants électriques sont disposés sur une carte de circuit imprimé (12).
